# DEMANDE DE BREVET EUROPEEN

(11) **EP 4 438 387 A1**
(43) Date de publication de la demande: **02.10.2024**
(21) Numéro de dépôt: 24164206.5
(22) Date de dépôt: 18.03.2024
(51) Int. Cl.: B60L 50/50, B60L 53/30, H02J 7/00

(54) **PROCEDE DE GESTION D'UNE DEMANDE DE RECHARGE D'UNE BATTERIE D'UN VEHICULE ELECTRIQUE**

(30) Priorité: 27.03.2023 FR 2302899
(71) Demandeur: Orange, 92130 Issy-les-Moulineaux (FR)
(72) Inventeur: FROGER, Bruno, 92326 Chatillon (FR)

(57) **Abrégé**

L'invention se rapporte à un procédé de gestion d'une demande (DEM) de recharge d'une batterie d'un véhicule électrique, réalisé par une entité de gestion (EG) apte à communiquer via un réseau de communication (NET), caractérisé en ce qu'il comprend une étape de réception d'une demande (DEM) de recharge d'une batterie d'un véhicule électrique émise par un terminal client (TC) associé audit véhicule électrique, suivie par une étape de recherche (REC), parmi d'autres terminaux clients (TC1, TC2, TC3) associés à d'autres véhicules électriques, des terminaux clients aptes à répondre à la demande (DEM) de recharge par des propositions de recharge, et une étape de réponse (REP) incluant la liste issue de l'étape de recherche (REC), ladite réponse (REP) comprenant une proposition de recharge combinant plusieurs propositions de recharge.

## Description

### Domaine technique

Le domaine technique est celui de l'alimentation en électricité des véhicules électriques.

Plus précisément, l'invention se rapporte à un procédé de gestion d'une demande de recharge d'une batterie d'un véhicule électrique.

Les véhicules automobiles électriques se déploient de plus en plus dans le contexte de la transition écologique. L'Union Européenne a par exemple décidé d'interdire à la vente à partir de 2035 les véhicules neufs munis d'un moteur thermique. La part prise par les véhicules électriques dans les véhicules en circulation augmente donc fortement et va continuer à augmenter.

De façon générale, ces véhicules électriques disposent d'une batterie embarquée qui contient une quantité de charge électrique importante. Au fur et à mesure de la circulation du véhicule, le moteur électrique utilise la charge présente dans la batterie. Lorsque la charge de la batterie est épuisée, le véhicule ne peut plus se déplacer de façon autonome. En règle générale, la distance que peut parcourir un véhicule électrique de façon autonome en utilisant la charge de sa batterie est inférieure à la distance que peut parcourir en autonomie un véhicule à moteur thermique de catégorie similaire. Il y a donc un intérêt à gérer de façon la plus efficace possible la recharge des batteries des véhicules électriques.

### Etat de la technique

Au fur et à mesure du déploiement des véhicules électriques, l'infrastructure nécessaire de recharge des batteries des véhicules doit également être déployée.

Cette infrastructure va s'appuyer sur l'infrastructure existante de distribution de courant électrique : par exemple, il est possible de recharger la batterie de son véhicule électrique à domicile en utilisant l'alimentation électrique domestique. Mais des bornes de recharge doivent également permettre la recharge des batteries des véhicules électriques pendant leur déplacement, de la même manière que les stations-service permettent d'alimenter en carburant les véhicules thermiques en déplacement. Comme l'autonomie des véhicules électriques est en général plus faible que celle d'un véhicule thermique, il faudra probablement développer un réseau plus dense de stations de recharge que le réseau équivalent de stations-service existant pour les véhicules thermiques. Ce problème est accru par le fait que la recharge d'un véhicule électrique prend en général un temps plus important que le remplissage d'un réservoir d'un véhicule thermique. Un véhicule électrique en recharge va donc occuper une place dédiée plus longtemps qu'un véhicule thermique ne le fera sur une place équivalente d'une station-service.

Il faut donc s'attendre à ce que le déploiement des véhicules électriques nécessite le déploiement d'importantes infrastructures dédiées au rechargement des batteries des véhicules. Même en présence d'un tel déploiement, la faible autonomie des véhicules électriques comparée à celle de leurs équivalents thermiques va augmenter le risque de panne due à la décharge de batterie si on le compare au risque de panne sèche des véhicules thermiques.

D'autre part, les véhicules électriques peuvent, sous certaines conditions, transférer une partie de la charge de leur batterie vers la batterie d'un autre véhicule. Cela implique la présence d'un câble adapté et une compatibilité entre les capacités de décharge et de recharge des batteries des deux véhicules. En cas de panne d'un véhicule électrique, dont la batterie ne dispose plus d'une charge suffisante pour lui permettre de se déplacer jusqu'à une station de recharge, cela peut permettre de dépanner le véhicule en panne en lui transférant une charge minimale suffisante pour rejoindre une station de recharge proche. Le transfert d'une charge d'un véhicule à l'autre étant limité et prenant un temps plus long que dans une station de recharge dédiée, il s'appliquera préférentiellement dans une situation de dépannage.

Cependant, il n'existe pas de solution permettant d'anticiper le besoin d'un dépannage ou de faciliter l'organisation de celui-ci en cas de besoin.

L'invention vient améliorer la situation.

### Exposé de l'invention

Selon un premier aspect fonctionnel, l'invention a trait à un procédé de gestion d'une demande de recharge d'une batterie d'un véhicule électrique, réalisé par une entité de gestion apte à communiquer via un réseau de communication, caractérisé en ce qu'il comprend une étape de réception d'une demande de recharge d'une batterie d'un véhicule électrique émise par un terminal client associé audit véhicule électrique, dit terminal client demandeur, suivie par une étape de recherche, parmi d'autres terminaux clients associés à d'autres véhicules électriques, d'une liste de terminaux clients aptes à répondre à la demande de recharge par des propositions de recharge, et une étape d'émission d'une réponse incluant ladite liste de terminaux clients aptes à répondre à la demande de recharge, issue de l'étape de recherche, ladite réponse comprenant une proposition de recharge combinant plusieurs propositions de recharge.

Grâce à l'invention, un utilisateur peut demander une recharge de la batterie de son véhicule électrique, grâce à un terminal client. Une entité, souvent confondue avec un serveur informatique, va rechercher parmi d'autres terminaux clients ceux qui sont susceptibles de répondre à cette demande. Cette demande de recharge peut être faite alors que l'utilisateur circule à bord du véhicule électrique à recharger. La recharge pourra s'effectuer en transférant une charge définie en commun d'un véhicule au véhicule demandeur. Certains des terminaux clients participants se seront affichés comme pouvant répondre à une telle demande de façon générale ; ce seront par exemple des garagistes aptes à dépanner des clients sur une zone donnée. D'autres répondront de façon opportuniste, sans que ce soit leur activité première, car ils peuvent remplir la demande de recharge en question. Des utilisateurs de véhicules électriques circulant à proximité du véhicule associé au terminal client demandeur pourront proposer une recharge de dépannage à celui-ci après avoir fixé un rendez-vous et l'ensemble des paramètres nécessaires à la réalisation de la recharge.

La réponse combine plusieurs propositions de recharge. Ceci permet de mieux s'adapter si besoin à des contraintes de parcours, ou bien de prix. La combinaison de plusieurs propositions de recharge permet à l'entité de gestion d'avoir une plus grande souplesse dans la réponse proposée au terminal client qui demande une recharge.

La réponse incluant la liste issue de l'étape de recherche sera dans la majorité des modes de réalisation une réponse directe au terminal client demandeur. Dans certains modes, la réponse sera transmise au terminal client demandeur en utilisant un ou plusieurs intermédiaires. Par exemple, l'étape de recherche peut consister en un transfert à un terminal client de la demande de recharge, terminal qui peut ou non s'inscrire sur la liste de terminaux clients aptes à répondre à la demande, et un terminal client peut être celui qui transmet la liste issue de l'étape de recherche au terminal client demandeur.

Le procédé selon l'invention comprend une étape de recherche par l'entité de gestion suivie par une étape d'émission d'une réponse incluant une liste de terminaux clients aptes à répondre à la demande de recharge et une proposition de recharge combinant plusieurs propositions de recharge. Il est clair que l'entité de gestion peut poursuivre la recherche après avoir émis une première réponse, et le procédé selon l'invention comprend également l'émission de réponses supplémentaires incluant des listes d'autres terminaux clients aptes à répondre à la demande, ces autres terminaux clients étant trouvés par l'entité de gestion au fur et à mesure de la recherche ainsi que d'autres combinaisons si besoin.

Selon un premier mode de mise en oeuvre particulier de l'invention, la demande de recharge comprend une information de quantité de charge électrique à transférer durant la recharge, dite quantité de charge demandée, et, lorsque les propositions de recharge par les terminaux clients comprennent des quantités de charge proposées inférieures à la quantité de charge demandée, la réponse inclut une proposition de recharge combinant plusieurs propositions de recharge assurant la recharge demandée.

Grâce à ce mode de mise en oeuvre, la combinaison de proposition de recharges permet d'obtenir une quantité de charge demandée. De cette manière, même en présence de propositions insuffisantes, le terminal client pourra obtenir une proposition satisfaisante.

Selon un autre mode de mise en oeuvre particulier de l'invention, qui pourra être mis en oeuvre alternativement ou cumulativement avec le précédent mode, la demande de recharge comprend une information de localisation et l'étape de recherche se fonde sur cette information.

Grâce à ce mode, la recherche d'un terminal client pouvant répondre à la demande de recharge se fait de manière optimisée, en prenant en compte l'élément primordial qu'est la localisation du demandeur. Seuls les terminaux clients pouvant intervenir dans une zone suffisamment proche de la localisation du demandeur seront recherchés et sélectionnés. La localisation peut être une localisation future, planifiée par le terminal client demandeur comme étant celle où le véhicule électrique associé aura besoin d'une recharge en prenant en compte des paramètres tels que la vitesse du véhicule, son trajet, sa consommation de charge électrique, la quantité de charge électrique restante dans la batterie.

Selon un autre mode de mise en oeuvre de l'invention, qui pourra être mis en oeuvre alternativement ou cumulativement avec les modes précédents, l'étape de recherche comprend une transmission par l'entité de gestion à des terminaux clients de la demande de recharge reçue.

Dans ce mode, l'entité de gestion diffuse la demande de recharge à des terminaux clients susceptibles de répondre positivement à cette demande. L'information de localisation reçue précédemment peut orienter la recherche et donc la sélection des terminaux clients auxquels la demande est diffusée. De cette manière, l'entité de gestion pourra disposer de propositions de recharge répondant à la demande, émises par des terminaux clients qui pourront répondre à la demande.

Selon un autre mode de mise en oeuvre de l'invention, qui pourra être mis en oeuvre cumulativement avec les précédents modes, le procédé comprend de surcroît une réception par l'entité de gestion de propositions de recharge émises par des terminaux clients auxquels la demande de recharge a été transmise, et l'étape de réponse comprend une transmission par l'entité de gestion au terminal client demandeur desdites propositions de recharge.

Dans ce mode, les propositions de recharge sont transmises au terminal client demandeur. Une recherche par l'entité de gestion permet de réaliser une sélection des possibilités parmi les terminaux clients, de ceux qui sont aptes à répondre à la demande, mais ce sera bien au demandeur de réaliser le choix final parmi les propositions de recharge possibles.

Selon un autre mode de mise en oeuvre de l'invention, qui pourra être mis en oeuvre alternativement ou cumulativement avec les modes précédents, le procédé comprend de surcroît une réception par l'entité de gestion d'une information représentative d'un choix par le terminal client demandeur parmi les propositions de recharge transmises par l'entité de gestion.

Grâce à ce mode, le choix réalisé est transmis aux entités qui ont fait des propositions de recharge afin que la recharge puisse être finalement effectuée par le propriétaire responsable du terminal client qui a fait la proposition de recharge choisie. L'entité de gestion peut transmettre l'information représentative d'un choix à l'ensemble des autres terminaux clients, en particulier à ceux qui ont fait une proposition de recharge.

Selon un autre mode de mise en oeuvre de l'invention, qui pourra être mis en oeuvre alternativement ou cumulativement avec les modes précédents, une proposition de recharge comprend une ou plusieurs données choisies parmi :
a) les coordonnées d'un lieu où effectuer la recharge ;
b) un créneau temporel durant lequel effectuer la recharge ;
c) une quantité de charge électrique à transférer durant la recharge ;
d) une donnée représentative d'une contrepartie pour effectuer la recharge.

Grâce à ce mode de mise en oeuvre, les terminaux clients qui souhaitent répondre positivement à la demande de recharge transmettent des informations relatives à leur proposition de recharge. Il est ainsi possible aux utilisateurs des terminaux clients qui font des propositions de recharge de rendre celles-ci suffisamment précises pour informer le choix qui sera effectué par le terminal client qui a fait la demande de recharge. Parmi les informations importantes à donner, on retrouve le lieu où effectuer la recharge. Un créneau temporel peut également être proposé. D'autres informations importantes sont la quantité de charge électrique qui est proposée, qui peut être exprimée en watts ou bien en pourcentage de recharge d'une batterie, ainsi qu'une contrepartie qui sera demandée pour effectuer la recharge, c'est-à-dire un prix par exemple.

Selon un autre mode de mise en oeuvre de l'invention, qui pourra être mis en oeuvre alternativement ou cumulativement avec les modes précédents, la demande de recharge comprend une information de quantité de charge électrique à transférer durant la recharge, dite quantité de charge demandée, et, si les propositions de recharge émises par les terminaux clients comprennent des quantités de charge proposées inférieures à la quantité de charge demandée, l'entité de gestion transmettra au terminal client demandeur une proposition de recharge combinant plusieurs propositions de recharge émises.

Grâce à ce mode de réalisation, l'entité de gestion peut construire une proposition de recharge combinant plusieurs propositions de recharge émises par des terminaux clients afin que la quantité de charge obtenue à la fin des plusieurs recharges soit le plus proche possible de la quantité demandée. Dans ce mode, l'entité de gestion joue le rôle d'un organisateur qui va permettre de remplir le besoin du terminal client demandeur à partir de propositions partielles, alors que dans les autres modes l'entité de gestion joue principalement un rôle d'intermédiaire.

Selon un second aspect fonctionnel, l'invention a trait à un procédé d'obtention d'une recharge d'une batterie d'un véhicule électrique réalisé par un terminal client associé audit véhicule électrique, dit terminal client demandeur, le terminal client demandeur étant apte à communiquer via un réseau de communication, caractérisé en ce qu'il comprend une transmission par le terminal client demandeur, via le réseau de communication, vers une entité de gestion, d'une demande de recharge d'une batterie dudit véhicule électrique suivie par la réception par le terminal client demandeur d'une réponse incluant une liste de terminaux clients aptes à répondre à la demande de recharge par des propositions de recharge, ladite réponse comprenant une proposition de recharge combinant plusieurs propositions de recharge.

Grâce à cet autre aspect de l'invention, le terminal client associé à un véhicule électrique peut transmettre une demande de recharge à une entité de gestion. La recherche effectuée par l'entité de gestion va permettre au terminal client de recevoir une ou des réponses incluant une liste de terminaux clients aptes à répondre à la demande. Cette liste pourra être vide, si aucun terminal client n'a été trouvé par l'entité de gestion. Plusieurs réponses pourront se succéder avec plusieurs listes incluant des terminaux clients aptes à répondre à la demande. De plus, le procédé d'obtention comprend également la réception par le terminal client de propositions de recharge. Le terminal client pourra faire un choix parmi les propositions de recharge et transmettre une information représentative de ce choix à l'entité de gestion.

La proposition de recharge faite par l'entité de gestion combine plusieurs propositions de recharge. Cette combinaison permet d'obtenir des solutions qui respectent les contraintes du demandeur, par exemple des contraintes en terme de prix, ou en terme de parcours, et enfin si les propositions individuelles de recharge ne permettent pas d'obtenir la quantité de charge demandée par le terminal client.

La demande de recharge est transmise vers une entité de gestion. Dans la très grande majorité des modes de réalisation, la demande sera transmise directement du terminal client demandeur à l'entité de gestion. Cependant, dans certains modes, la demande pourra être envoyée à d'autres terminaux clients connus du terminal client demandeur. Une liste de terminaux clients aptes à répondre à la demande pourra être transmise de proche en proche et finalement adressée à l'entité de gestion dont le rôle, dans ce mode de réalisation, sera principalement de garder trace des propositions. A l'extrême, la demande de recharge peut être transmise de proche en proche entre terminaux clients sans intervention d'une entité de gestion.

Selon un premier mode de mise en oeuvre de cet aspect de l'invention, le procédé d'obtention comprend de surcroît l'émission par le terminal client demandeur vers l'entité de gestion d'une information représentative d'un choix de terminal client dans la liste incluse dans la réponse.

Grâce à ce mode de mise en oeuvre, le terminal client demandeur fait remonter à l'entité de gestion un choix parmi les terminaux clients aptes à répondre à la demande. Des informations détaillant les propositions de recharge auront pu être transmises au terminal client demandeur, telles qu'une proposition de lieu où effectuer la recharge, un créneau temporel, une quantité de charge électrique à transférer, une contrepartie à donner pour effectuer la recharge, des informations de compatibilité technique, et toute autre information utile à la réalisation effective de la recharge. Le choix pourra ensuite être transmis aux terminaux clients qui ont été trouvés aptes à répondre à la demande de recharge ou qui ont fait des propositions de recharge.

Selon un deuxième mode de mise en oeuvre de ce second aspect de l'invention, la liste de terminaux clients aptes à répondre à la demande incluse dans la réponse comprend des informations de contact des terminaux clients aptes à répondre et le procédé comprend de surcroît l'émission d'un message par le terminal client demandeur vers un des terminaux clients aptes à répondre en utilisant les informations de contact de ce terminal client.

Grâce à ce mode de réalisation, le rôle de l'entité de gestion est réduit au minimum. Une fois que l'étape de recherche permet à l'entité de gestion de proposer des terminaux clients pouvant répondre à la demande de recharge, c'est le terminal client demandeur lui-même qui va prendre contact, sans intermédiaire, avec des terminaux clients pouvant répondre à sa demande. Ce mode permet d'obtenir plus rapidement une réponse en contactant directement un terminal client pouvant répondre à la demande. Au fur et à mesure que les terminaux clients disposent de leurs informations de contact, ils pourront ultérieurement se contacter directement sans faire intervenir l'entité de gestion, sauf éventuellement dans un rôle d'archivage des transactions.

Selon un troisième mode de mise en oeuvre de ce second aspect de l'invention, la demande de recharge est transmise par le terminal client demandeur après un calcul prenant en compte au moins un paramètre choisi dans la liste suivante :
a) la localisation du véhicule électrique auquel le terminal client demandeur est associé ;
b) la direction et la vitesse de déplacement dudit véhicule électrique,
c) la charge courante de la batterie ;
d) la consommation du véhicule électrique ;
e) la présence de points de recharge de batteries à proximité de la localisation du véhicule électrique auquel le terminal client demandeur est associé dans la direction de son déplacement.

L'avantage de ce mode de mise en oeuvre est de permettre un calcul précis utilisant le maximum de paramètres possibles pour définir le besoin de recharge du véhicule électrique. Le résultat de ce calcul pourra fournir une information de localisation dans laquelle la recharge sera souhaitable en prenant en compte le déplacement planifié du véhicule électrique. Une telle information permettra de faciliter la recherche de terminaux clients aptes à répondre à la demande ainsi que la recherche de propositions de recharge que pourront faire ces terminaux clients.

Selon un premier aspect matériel, l'invention se rapporte à une entité de gestion dotée de moyens de communication, comprenant un module de réception de demandes de recharges de batteries de la part de terminaux clients, un module de recherche de terminaux clients aptes à répondre à une demande de recharge reçue par des propositions de recharge et un module de réponse apte à émettre une réponse incluant une liste de terminaux clients aptes à répondre à une demande, ladite réponse comprenant une proposition de recharge combinant plusieurs propositions de recharge, l'entité de gestion étant apte à réaliser un procédé de gestion selon l'invention.

Selon un deuxième aspect matériel, l'invention se rapporte à un terminal client doté de moyens de communication, comprenant un module de transmission d'une demande de recharge de batterie auprès d'une entité de gestion et un module de réception de réponse incluant une liste de terminaux clients aptes à répondre à la demande de recharge par des propositions des recharge, ladite réponse comprenant une proposition de recharge combinant plusieurs propositions de recharge, le terminal client étant apte à réaliser un procédé d'obtention selon l'invention.

Selon un mode de réalisation de ce deuxième aspect matériel, l'invention se rapporte à un véhicule automobile électrique comprenant un terminal client selon l'invention.

Selon un autre mode de réalisation de ce deuxième aspect matériel, l'invention se rapporte à un terminal mobile selon l'invention.

Selon un autre aspect matériel, l'invention a trait à un programme d'ordinateur apte à être mis en oeuvre par une entité de gestion, le programme comprenant des instructions de code qui, lorsqu'il est exécuté par un processeur, réalise les étapes du procédé de gestion défini ci-dessus.

Selon un autre aspect matériel, l'invention a trait à un programme d'ordinateur apte à être mis en oeuvre par un terminal client, le programme comprenant des instructions de code qui, lorsqu'il est exécuté par un processeur, réalise les étapes du procédé d'obtention défini ci-dessus.

Enfin, selon un autre aspect matériel, l'invention a trait à des supports de données sur lesquels sont enregistrés des programmes d'ordinateurs comprenant des séquences d'instructions pour la mise en oeuvre des procédés de gestion et d'obtention définis ci-dessus.

Les supports de données peuvent être n'importe quelle entité ou dispositif capable de stocker les programmes. Par exemple, les supports peuvent comporter un moyen de stockage, tel qu'une ROM, par exemple un CD ROM ou une ROM de circuit microélectronique, ou encore un moyen d'enregistrement magnétique tel qu'un un disque dur. D'autre part, les supports peuvent être des supports transmissibles tels qu'un signal électrique ou optique, qui peuvent être acheminés via un câble électrique ou optique, par radio ou par d'autres moyens. Les programmes selon l'invention peuvent être en particulier téléchargés sur un réseau de type Internet. Alternativement, le support d'informations peut être un circuit intégré dans lequel le programme est incorporé, le circuit étant adapté pour exécuter ou pour être utilisé dans l'exécution du procédé en question.

### Brève description des figures

L'invention sera mieux comprise à la lecture de la description qui suit, donnée à titre d'exemple, et faite en référence aux dessins annexées sur lesquels :
[Fig 1] représente un terminal client transmettant une demande de recharge à une entité de gestion.
[Fig 2] illustre un exemple d'étapes mises en œuvre dans le cadre d'un mode de réalisation de l'invention.

### Description détaillée

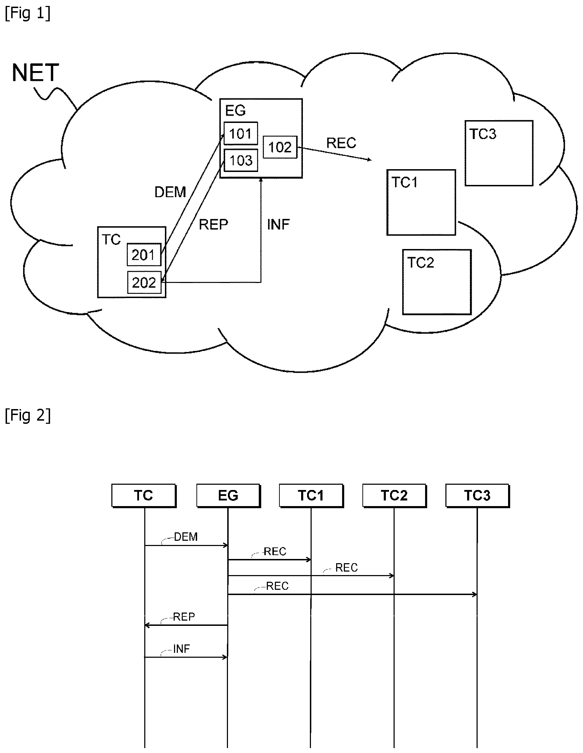

La figure 1 représente un terminal client TC et une entité de gestion EG. Ces deux éléments peuvent communiquer entre eux ou avec d'autres terminaux clients TC1, TC2, TC3 grâce à un réseau de communication NET.

L'entité de gestion EG présente l'architecture matérielle d'un ordinateur conventionnel. Il comporte notamment un processeur, une mémoire vive de type RAM et une mémoire morte telle qu'une mémoire de type Flash, ROM, (non représentés sur la figure) ainsi que des dispositifs d'entrée-sortie tels que claviers et/ou écrans (non représentés sur la figure). L'entité de gestion EG peut s'exécuter dans un serveur matériel accessible grâce au réseau de communication NET ou bien s'exécuter dans une architecture informatique en nuage (*cloud computing* en anglais).

Le terminal client TC présente également l'architecture matérielle d'un ordinateur conventionnel, comportant notamment un processeur, des éléments mémoire et des dispositifs d'entrée-sortie non représentés sur la figure. Le terminal client TC pourra par exemple être directement embarqué dans un véhicule électrique et s'exécuter sur un processeur intégré dans le véhicule. Le terminal client TC pourra également être un ordinateur portable ou un terminal mobile tel qu'un ordiphone (traduction de l'anglais *smartphone*) qui pourra communiquer avec des utilisateurs à travers des interfaces proposés dans un véhicule électrique, telles que des interfaces WiFi ou Bluetooth, ou bien grâce à ses propres interfaces. Le terminal client embarquera un programme qui réalisera les étapes du procédé, programme rédigé dans un langage de programmation adapté pour s'exécuter dans le terminal client, selon le système d'exécution de celui-ci. Quand le terminal client est embarqué dans un véhicule électrique, il est directement associé à ce véhicule électrique. Quand le terminal client est un terminal mobile, un ordiphone ou un ordinateur portable, il pourra être associé à un véhicule électrique par un procédé d'appairage bien connu dans l'état de la technique. Quand le véhicule électrique circule, le terminal client tel qu'un ordiphone associé au véhicule électrique pourra disposer d'informations telles que le niveau de la charge de la batterie, ou la localisation, la vitesse et la direction du véhicule à travers des interfaces de communication du véhicule électrique non représentées sur la figure 1.

Grâce à ces modes de réalisation, le terminal client TC peut effectuer une demande DEM de recharge de batterie en route dans un véhicule électrique, pour obtenir une recharge afin d'éviter une panne du véhicule. Le terminal client TC peut aussi être un ordinateur classique et la demande DEM de recharge servira alors dans un contexte de planification de voyage, pour prévoir une étape de recharge d'une batterie à un endroit et un moment planifié.

Les autres terminaux clients TC1, TC2, TC3 présentent la même architecture matérielle que le terminal client TC. Dans la majorité des modes de réalisation, le terminal client TC et les autres terminaux clients TC1, TC2, TC3 sont en fait identiques et vont pouvoir remplir des fonctions différentes selon les besoins de leurs utilisateurs. Dans un cas, les clients logiciels tels que TC sont utilisés pour demander DEM une recharge de batterie de véhicule électrique, alors que dans d'autres cas, les terminaux clients tels que TC1, TC2, TC3 vont proposer de répondre à cette demande. Mais le même terminal client TC pourra également répondre à une demande DEM de recharge issue d'un autre terminal client TC1, TC2, TC3 dans un autre contexte. Dans ce cas, un même terminal client TC sera demandeur d'une recharge à un moment et répondra à une demande de recharge à un autre moment.

Dans certains modes de réalisation, les autres terminaux clients TC1, TC2, TC3 qui vont répondre à la demande DEM ne sont pas associés à un véhicule électrique. Il peut s'agir de terminaux clients utilisés par des dépanneurs qui vont répondre à la demande DEM de recharge en se rendant sur le lieu de dépannage pour procéder à une recharge avec une batterie dédiée, qui n'est pas celle d'un véhicule électrique, mais qui est dédié au dépannage. Il peut aussi s'agir de terminaux clients utilisés par des particuliers qui peuvent proposer une recharge à leur domicile, ou ailleurs, en donnant accès à une borne de recharge, ou même juste à une prise électrique, pour procéder à la recharge.

En général, le terminal client demandeur TC adresse sa demande à l'entité de gestion EG qui joue le rôle d'intermédiaire entre le terminal client demandeur TC et les autres terminaux clients TC1, TC2, TC3 parmi lesquels se trouvent ceux aptes à répondre à la demande DEM. Mais dans d'autres modes de réalisation de l'invention, les terminaux clients TC, TC1, TC2, TC3 peuvent communiquer directement entre eux, et le rôle de l'entité de gestion peut alors être limité à celui d'une mise en contact initiale ou d'enregistrement des transactions.

L'entité de gestion EG comprend un module 101 de réception de demandes DEM de recharges de batteries.

L'entité de gestion EG comprend un module 102 de recherche de terminaux clients TC1, TC2, TC3 aptes à répondre à une demande de recharge de batteries.

L'entité de gestion EG comprend un module 103 de réponse REP à une demande DEM de recharge de batterie.

Le terminal client TC comprend un module 201 de transmission d'une demande DEM de recharge de batterie.

Le terminal client TC comprend un module 202 de réception d'une réponse REP incluant une liste de terminaux clients aptes à répondre à la demande.

L'entité de gestion EG communique avec le terminal client TC et les autres terminaux clients TC1, TC2, TC3 grâce au réseau de communication NET. En général, ce réseau de communication NET est le réseau Internet auquel l'ensemble des participants au procédé de demande de recharge ainsi qu'au procédé d'obtention sont reliés. Les terminaux clients TC et TC1, TC2, TC3 peuvent se connecter au réseau de communication NET tout en étant en déplacement grâce aux techniques de télécommunications mobiles telles que la 3G, 4G, 5G ou autres. L'entité de gestion EG, quant à elle, ne sera en général pas mobile, mais sera bien connectée au même réseau de communication NET. Dans certains modes de réalisation, les procédés de demande de recharge et d'obtention peuvent être mis en oeuvre pour un ensemble privé de terminaux clients TC. Dans ce cas, le réseau NET peut être un réseau privé, qui peut être dédié à la mise en oeuvre de ces procédés. Par exemple, le réseau NET peut être une tranche (de l'anglais *slice*) d'un réseau de télécommunications 5G, tranche à laquelle seuls des terminaux clients participants aux procédés de demande de recharge et d'obtention vont avoir accès. De cette manière, la sécurité des communications pour réaliser les procédés est maximale. Une telle tranche d'un réseau de télécommunications 5G peut être par exemple opérée par un constructeur automobile, et dans ce cas, le procédé de gestion de la demande d'une recharge sera mis en oeuvre uniquement entre une entité de gestion EG et des terminaux clients TC, TC1, TC2, TC3 associés à des véhicules électriques du constructeur en question. Le procédé de gestion sera alors une entraide entre utilisateurs des véhicules électriques d'un même constructeur qui seront prêts à partager des charges électriques pour se dépanner.

Dans certains modes de réalisation, le procédé de gestion selon l'invention comprend un enregistrement de terminaux clients TC1, TC2, TC3 auprès de l'entité de gestion EG. Cet enregistrement consiste à se présenter comme étant disponible pour répondre ultérieurement à des demandes DEM de recharge de batterie. L'enregistrement permet à l'entité de gestion EG de sauvegarder tout un ensemble de paramètres à propos des demandes de recharge auxquelles les terminaux clients TC1, TC2, TC3 sont aptes à répondre. Dans des modes de réalisation, les clients participants TC1, TC2, TC3 devront préciser les modèles de batterie qu'ils pourront recharger pour donner suite à des demandes. Dans d'autres modes, les clients participants TC1, TC2, TC3 préciseront des zones géographiques ou des périodes temporelles pour lesquelles ils sont prêts à répondre à des demandes. Un autre paramètre possible pouvant être fourni à l'enregistrement est la contrepartie que demandera l'utilisateur d'un terminal client enregistré TC1, TC2 ou TC3 pour répondre à une demande de recharge. Cette contrepartie pourra être par exemple un prix de la quantité de charge électrique qui sera fournie en réponse à la demande de recharge. Le prix de la charge pourra être exprimé pour une quantité de watts donnée ou pour un pourcentage de recharge de batterie donné. Dans certains modes, l'enregistrement des terminaux clients TC1, TC2, TC3 comprendra la fourniture d'une autorisation pour que l'entité de gestion EG puisse disposer d'informations en temp réel fournies par les terminaux clients TC1, TC2, TC3 telles que la localisation des véhicules électriques associés aux terminaux clients TC1, TC2, TC3 ou la quantité de charge électrique contenue dans la ou les batteries des véhicules électriques associés. Ces informations pourront être utilisées par l'entité de gestion EG pendant l'étape de recherche REC.

Le procédé de gestion selon l'invention comprend ensuite la réception par l'entité de gestion d'une demande DEM de recharge d'une batterie d'un véhicule électrique, la demande DEM étant émise par le terminal client TC. Le terminal client TC peut s'être enregistré au préalable auprès de l'entité de gestion EG comme participant au procédé mais ce n'est pas le cas dans certains modes de réalisation.

Dans certains modes de réalisation, la demande DEM de recharge comprendra des informations techniques relatives à la batterie qui doit être rechargée. Une telle information technique peut être par exemple le modèle de la batterie ou du véhicule électrique qui doit être rechargé, ou le modèle de câble de recharge compatible avec le véhicule électrique.

Dans d'autres modes de réalisation, la demande DEM de recharge comprend une information de localisation. Cette information de localisation peut être par exemple une zone dans laquelle l'utilisateur du terminal client TC souhaite que la recharge ait lieu. Cette information de localisation peut être également complétée par une information temporelle, précisant la période où la recharge est souhaitée.

Dans d'autres modes de réalisation, la demande DEM de recharge comprend une information relative à la quantité de charge électrique dont il est souhaité qu'elle soit transférée pendant la recharge. Cette information peut être exprimée en watts ou en pourcentage de charge d'une batterie. Une information de prix souhaité peut également être comprise dans la demande DEM de recharge.

Le procédé de gestion selon l'invention comprend ensuite une étape REC de recherche parmi les terminaux clients TC1, TC2, TC3 de ceux qui sont aptes à répondre à la demande DEM.

L'étape de recherche REC par l'entité de gestion EG peut se faire en utilisant uniquement les informations enregistrées lors de l'enregistrement des terminaux clients TC1, TC2, TC3. Un terminal client peut par exemple avoir annoncé être disponible à tout moment sur une zone géographique donnée pour répondre à des demandes de recharge pour un modèle donné de batterie ou de véhicule. Si les critères de la demande DEM de recharge correspondent, l'entité de gestion EG peut conclure que ce terminal client peut répondre à la demande DEM, et celui-ci fera donc partie des clients aptes à répondre à la demande DEM qui auront été trouvés par l'étape de recherche REC. Dans des modes de réalisation, les terminaux clients enregistrés TC1, TC2, TC3 remontent régulièrement à l'entité de gestion EG une information de localisation et l'entité de gestion EG utilise ces informations de localisation dans l'étape de recherche REC. Une autre information qui peut être utilisée par l'entité de gestion EG est la quantité de charge présente dans la batterie des véhicules électriques associés aux terminaux clients TC1, TC2, TC3.

Dans un autre mode de réalisation, l'étape de recherche REC va consister pour l'entité de gestion EG à transmettre la demande DEM de recharge aux terminaux clients participants TC1, TC2, TC3. L'entité de gestion EG peut combiner ces deux modes. Les informations enregistrées au sujet des terminaux clients TC1, TC2, TC3 peut permettre à l'entité de gestion EG de déterminer quels sont les clients les plus susceptibles de répondre positivement à la demande DEM, et l'entité de gestion EG ne transmettra la demande DEM de recharge qu'à un sous-ensemble des terminaux clients TC1, TC2, TC3, sous-ensemble obtenu en choisissant les plus susceptibles de répondre positivement à la demande DEM. Les informations de localisation des terminaux clients TC1, TC2, TC3 qui sont remontés régulièrement à l'entité de gestion EG peuvent être utilisés pour déterminer quels sont les clients les plus susceptibles de répondre à la demande DEM.

Le procédé de gestion selon l'invention comprend ensuite une étape de réponse REP par l'entité de gestion au terminal client demandeur TC en fonction du résultat de l'étape de recherche REC. Cette réponse REP inclut une liste de terminaux clients aptes à répondre à la demande DEM. La liste peut être vide si l'étape de recherche REC n'a pas été fructueuse.

Dans certains modes de réalisation, l'étape de recherche REC va se poursuivre après l'émission de la réponse REP. L'entité de gestion EG pourra alors émettre des réponses REP supplémentaires, avec de nouvelles listes incluant des terminaux clients supplémentaires aptes à répondre à la demande DEM.

Dans certains modes de réalisation, la réponse REP comprend des informations de contact avec les terminaux clients aptes à répondre à la demande DEM et le terminal client demandeur TC pourra entrer directement en contact avec un des terminaux clients aptes à répondre à la demande DEM pour finaliser l'obtention d'une recharge.

Dans certains modes de réalisation, le procédé comprend une étape supplémentaire de réception par l'entité de gestion EG de propositions de recharge émises par des terminaux clients TC1, TC2, TC3 auxquels la demande DEM de recharge a été transmise lors de l'étape de recherche REC et l'étape de réponse REP comprend alors une transmission par l'entité de gestion EG au terminal client TC de ces propositions de recharge.

Dans d'autres modes de réalisation, l'entité de gestion EG aura effectué un choix parmi les propositions de recharge obtenues à la suite de l'étape de recherche REC et transmettra directement ce choix au terminal client demandeur TC sans avoir transmis la demande DEM aux terminaux clients participants TC1, TC2, TC3 car l'étape de recherche REC disposait de suffisamment d'informations obtenues lors de l'enregistrement pour faire un choix sans avoir à transmettre la demande.

Dans certains modes de réalisation, les terminaux clients participants TC1, TC2, TC3 qui peuvent répondre positivement à la demande DEM de recharge vont faire directement des propositions de recharge au terminal client TC qui a réalisé la demande DEM de recharge. Le terminal client TC demandeur recevra alors directement les propositions de recharge. Les terminaux clients TC et TC1, TC2, TC3 peuvent en effet communiquer directement entre eux par l'intermédiaire du réseau de communication NET, sans avoir à passer par l'intermédiaire de l'entité de gestion EG. La demande DEM de recharge de batterie doit alors comprendre un moyen de connecter directement le terminal client TC, tel qu'une adresse URL (de l'anglais *Uniform Resource Locator*) par exemple, ou une adresse de courrier ou de messagerie électronique ou un numéro de téléphone.

Dans des modes de réalisation, les propositions de recharge comprennent plusieurs informations afin de pouvoir concrétiser la proposition en question. Dans certains modes, la proposition comprend une proposition de lieu où effectuer la recharge. La proposition peut également comprendre une information temporelle pour préciser à quel moment la recharge peut être effectuée. Cette information temporelle peut être une date et heure de rendez-vous, à partir de laquelle la recharge pourra être effectuée, ou bien une plage temporelle, ou bien une date au-delà de laquelle la recharge ne sera plus possible.

Ces informations permettent de préparer un rendez-vous entre le véhicule auquel est associé le terminal client TC demandeur d'une recharge et l'utilisateur du terminal client TC1, TC2, TC3 qui propose d'effectuer une recharge. Une fois le rendez-vous défini, la recharge pourra s'effectuer grâce à une batterie que l'utilisateur du terminal client participant TC1, TC2, TC3 aura emmené au lieu de rendez-vous, batterie qui pourra être déchargée pour fournir une recharge à la batterie du véhicule électrique auquel est attaché le terminal client TC demandeur d'une recharge. Dans certains modes, l'utilisateur qui propose de répondre à la demande de recharge est un dépanneur, qui utilisera une batterie de dépannage dédiée pour effectuer la recharge demandée. Dans la plupart des modes de réalisation de l'invention, le terminal client participant TC1, TC2, TC3 est lui-même associé à un véhicule électrique, et la recharge se fera à partir de la batterie dudit véhicule électrique. Les terminaux clients participants TC1, TC2, TC3 sont alors des dépanneurs ponctuels, qui peuvent rendre service ponctuellement à l'utilisateur du terminal client TC demandeur d'une recharge de batterie pour son véhicule électrique en déchargeant la batterie de leur propre véhicule électrique associé au terminal client TC1, TC2, TC3. Ces dépanneurs ponctuels pourront être par exemple des conducteurs de véhicules qui circulent sur la même portion de route au d'autoroute que le véhicule électrique associé au terminal client TC demandeur d'une recharge. Le véhicule demandeur d'une recharge peut par exemple avoir besoin d'une recharge limitée pour aller jusqu'à une station de recharge complète en dehors de son autonomie courante, et l'entité de gestion EG va transmettre la demande de recharge émise par le terminal client TC aux terminaux clients TC1, TC2, TC3 de véhicules proches.

Les dépanneurs ponctuels peuvent être aussi des conducteurs de véhicules électriques du même constructeur que le véhicule électrique associé au terminal client demandeur TC, et le procédé peut être organisé par le constructeur des véhicules électriques en question. L'intérêt de ce mode de réalisation est d'assurer que les problèmes de compatibilité entre véhicules électriques ne se posent pas car ils sont issus du même constructeur.

Les dépanneurs ponctuels peuvent être aussi des particuliers, qui disposent d'une possibilité de recharge à un endroit précis, c'est-à-dire d'une prise électrique qu'ils peuvent mettre à disposition. L'emplacement du rendez-vous sera alors forcément l'emplacement de la prise électrique mise à disposition.

Dans certains modes, la proposition de recharge comprend une proposition de quantité de charge électrique à transférer durant la recharge. Grâce à cette information, le terminal client TC demandeur d'une recharge pourra savoir si les propositions de recharge lui permettront de remplir son besoin, et par exemple de se rendre après la recharge jusqu'à la destination du véhicule électrique auquel le terminal client TC est associé. L'entité de gestion EG pourra combiner des propositions de recharge qui proposent des quantités de charge électriques insuffisantes afin de réaliser des recharges successives qui permettront de répondre au besoin exprimé dans la demande DEM.

Dans certains modes, la proposition de recharge comprend une donnée représentative d'une contrepartie pour effectuer la recharge. Cette contrepartie pourra être par exemple un prix. Grâce à cette information, l'utilisateur du terminal client TC peut faire son choix entre les propositions de recharge qui lui sont faites. Le choix peut également être fait automatiquement par le terminal client TC, par exemple en choisissant la proposition de recharge qui a le prix le plus bas, une fois que des critères plus décisifs de lieu où faire la recharge, et de moment, ainsi que de quantité de charge électrique proposée, sont remplis. L'entité de gestion EG peut également prendre en compte la contrepartie demandée pour effectuer la recharge afin d'établir la liste incluse dans la réponse REP. L'entité de gestion EG pourra ainsi favoriser les terminaux clients qui demandent la contrepartie la plus faible pour effectuer la recharge, les autres conditions étant similaires.

L'invention a trait également à un procédé d'obtention d'une recharge d'une batterie d'un véhicule électrique réalisé par un terminal client TC associé audit véhicule électrique. Comme vu précédemment, le terminal client TC est apte à communiquer via le réseau de communication NET avec l'entité de gestion EG. Dans certains modes de réalisation le terminal client TC peut également communiquer directement avec d'autres terminaux clients TC1, TC2, TC3 à travers le réseau de communication NET sans passer par l'intermédiaire de l'entité de gestion EG.

Dans le procédé d'obtention, le terminal client TC transmet, via le réseau de communication NET, une demande DEM de recharge d'une batterie du véhicule électrique auquel est attaché le terminal client TC, vers l'entité de gestion EG. La demande DEM peut comprendre, selon les modes de réalisation, des informations telles que des informations de localisation, des indications temporelles, des indications relatives au modèle du véhicule et de la batterie à recharger, des indications relatives à la quantité de charge électrique demandée, ainsi qu'à la contrepartie financière pouvant être apportée.

Dans des modes de réalisation, le procédé d'obtention comprend de surcroît l'émission par le terminal client TC vers l'entité de gestion EG d'une information INF représentative d'un choix parmi les propositions de recharge reçues par le terminal client TC. L'information INF pourra ensuite être transmise vers les terminaux clients participants TC1, TC2, TC3.

Il est également possible au terminal client demandeur TC d'utiliser des informations de contact présentes dans la liste de terminaux clients aptes à répondre incluse dans la réponse REP pour contacter directement un terminal client qui pourra procéder à la recharge. Ces informations de contact peuvent être des numéros de téléphone, des adresses de messagerie électronique, des adresses de type URL (acronyme de l'anglais *Uniform Resource Locator*).

L'information INF permettra de finaliser le rendez-vous entre le véhicule électrique auquel est associé le terminal client TC et l'utilisateur des terminaux clients TC1, TC2, TC3 dont la proposition de recharge a été choisie par le terminal client TC. Ce rendez-vous permettra de procéder à la recharge demandée DEM par le terminal client TC et donc permettra au procédé d'obtention d'une recharge d'aboutir. Dans certains modes de réalisation, une fois la recharge effectuée, le procédé comprend de surcroît une opération de paiement effectuée par le terminal client TC par l'intermédiaire de l'entité de gestion EG. L'entité de gestion EG peut retenir une commission sur ce paiement. Dans certains modes de réalisation, le terminal client TC entre directement en contact avec le terminal client parmi les autres terminaux clients TC1, TC2, TC3 qui aura été choisi pour effectuer la recharge, et le paiement se fera directement du terminal client TC vers l'autre terminal client.

Dans des modes de réalisation, le terminal client TC effectue un calcul avant d'adresser sa demande DEM de recharge. Ce calcul prend en compte au moins un paramètre choisi dans la liste suivante :
a) la localisation du véhicule électrique auquel le terminal client TC est attaché ;
b) la direction et la vitesse du déplacement dudit véhicule électrique ;
c) la charge courante de la batterie ;
d) la consommation du véhicule électrique ;
e) la présence de points de recharge de batteries à proximité de la localisation du véhicule électrique auquel le terminal client TC est attaché dans la direction de son déplacement.

Ce calcul peut également être effectué en dehors du terminal client TC, par exemple par des ressources de calcul sollicitées par le terminal client TC, ou bien par l'entité de gestion EG elle-même qui, dans ce cas, va planifier le trajet du véhicule électrique associé au terminal client TC. Ce calcul permet au terminal client TC de prévoir le plus finement possible quand la batterie du véhicule électrique sera épuisée au cours de son trajet, et si l'absence de points de recharge dans la direction du déplacement justifie de mettre en oeuvre le procédé d'obtention. Ce calcul permet de déterminer une information de localisation qui peut être intégrée à la demande DEM de recharge. Cette information de localisation représente alors la zone dans laquelle le terminal client TC souhaite procéder à la recharge de batterie.

La figure 2, quant à elle, présente un exemple d'échange de messages lors d'une réalisation du procédé de gestion d'une demande de recharge et du procédé d'obtention d'une recharge selon l'invention.

Le terminal client TC est associé à un véhicule électrique. Il est apte à communiquer à travers le réseau de communication NET. Le terminal client TC peut réaliser des calculs qui lui permettent d'anticiper si le véhicule électrique auquel il est attaché aura besoin d'une recharge de batterie, et dans quelle zone. Le terminal client TC va alors transmettre une demande DEM de recharge de batterie à l'entité de gestion EG. La demande DEM va comprendre l'ensemble des informations nécessaires pour savoir comment la satisfaire, telles que par exemple des informations de localisation, des informations temporelles, des informations techniques sur le modèle de véhicule ou de batterie, des informations relatives à la charge demandée, des informations relatives au règlement proposé pour la charge ou toute autre information utile.

L'entité de gestion EG va procéder à une étape de recherche REC. Cette étape peut consister à requêter des terminaux clients TC1, TC2, TC3, comme indiqué sur la figure 2. Mais l'étape de recherche REC va aussi être effectuée par l'entité de gestion EG en sélectionnant des terminaux clients aptes à répondre à la demande DEM parmi les terminaux clients TC1, TC2, TC3 sans les requêter, grâce à des informations fournies au moment de leur enregistrement ou grâce à des informations de localisation des terminaux clients TC1, TC2, TC3 qui sont fournies régulièrement à l'entité de gestion EG. L'étape de recherche REC va en général combiner une étape de sélection par l'entité de gestion EG à partir des informations qui sont à sa disposition des terminaux clients parmi ceux TC1, TC2, TC3 qui sont susceptibles de répondre positivement à la demande DEM, étape de sélection suivie par une requête à ces terminaux clients sélectionnés s'ils sont prêts à répondre positivement à la demande DEM.

L'entité de gestion EG va à la suite de l'étape de recherche REC procéder à une ou plusieurs réponses REP à la demande DEM du terminal client TC. Cette ou ces réponses REP comprennent au moins une liste de terminaux clients aptes à répondre à la demande DEM et de façon générale l'ensemble des informations nécessaires pour que le terminal client TC puisse obtenir une recharge de la batterie du véhicule électrique auquel il est associé. La figure 2 montre une mise en oeuvre du procédé dans laquelle une seule réponse REP est émise. En particulier, une réponse REP peut comprendre des informations de localisation, des informations temporelles, des informations techniques sur la recharge proposée, des informations sur la contrepartie demandée. L'entité de gestion EG peut, dans certains modes, effectuer une sélection et ne proposer qu'un seul terminal client apte à répondre à la demande DEM et qu'une seule possibilité de recharge au terminal client demandeur TC. Dans d'autres modes, l'entité de gestion EG adresse plusieurs possibilités au terminal client demandeur TC dans la réponse REP, et le terminal client TC transmettra alors à l'entité de gestion EG une information INF relative à son choix. L'entité de gestion EG peut adresser plusieurs réponses REP au fur et à mesure de la poursuite de la recherche REC. Dans certains modes, le terminal client TC contacte directement le terminal client choisi pour répondre à la demande DEM et dans d'autres modes, l'entité de gestion EG conserve son rôle d'intermédiaire de communication entre le terminal client TC et le terminal client choisi pour répondre à la demande DEM.

Une fois le choix effectué, le rendez-vous permettra de procéder à la recharge effective de la batterie telle que demandée DEM par le terminal client TC. La recharge en question pourra avoir lieu à n'importe quel endroit où pourra stationner le véhicule électrique auquel est attaché le terminal client demandeur TC, et pas dans un point de recharge dédié telle une station-service distribuant des carburants. Celui qui procédera à la recharge pourra être un dépanneur dédié, utilisant un terminal client enregistré auprès de l'entité de gestion EG, ou bien un conducteur d'un autre véhicule électrique, qui pourra également être enregistré auprès de l'entité de gestion EG, faisant un parcours proche de celui du véhicule auquel est attaché le terminal client TC et disposé à dépanner ponctuellement ledit véhicule. Il pourra également s'agir d'un particulier disposé à dépanner un véhicule à son domicile. La recharge en elle-même consiste en un transfert d'une quantité de charge électrique depuis une batterie dédiée ou bien depuis une batterie d'un véhicule électrique ou bien d'une prise électrique. La recharge peut donner lieu à un paiement, et, dans certains modes de réalisation, l'entité de gestion EG sert d'intermédiaire à la réalisation du paiement, ou bien sert de garantie au paiement, et peut prélever une commission sur celui-ci.

Signalons enfin ici que, dans le présent texte, le terme « module » peut correspondre aussi bien à un composant logiciel qu'à un composant matériel ou un ensemble de composants matériels et logiciels, un composant logiciel correspondant lui-même à un ou plusieurs programmes ou sous-programmes d'ordinateur ou de manière plus générale à tout élément d'un programme apte à mettre en oeuvre une fonction ou un ensemble de fonctions telles que décrites pour les modules concernés. De la même manière, un composant matériel correspond à tout élément d'un ensemble matériel (ou hardware) apte à mettre en oeuvre une fonction ou un ensemble de fonctions pour le module concerné (circuit intégré, carte à puce, carte à mémoire, etc.).

## Revendications

1. Procédé de gestion d'une demande (DEM) de recharge d'une batterie d'un véhicule électrique, réalisé par une entité de gestion (EG) apte à communiquer via un réseau de communication (NET), **caractérisé en ce qu'**il comprend une étape de réception d'une demande (DEM) de recharge d'une batterie d'un véhicule électrique émise par un terminal client (TC) associé audit véhicule électrique, dit terminal client demandeur, suivie par une étape de recherche (REC), parmi d'autres terminaux clients (TC1, TC2, TC3) associés à d'autres véhicules électriques, d'une liste de terminaux clients aptes à répondre à la demande (DEM) de recharge par des propositions de recharge, et une étape d'émission d'une réponse (REP) incluant ladite liste de terminaux clients aptes à répondre à la demande (DEM) de recharge, issue de l'étape de recherche (REC), ladite réponse (REP) comprenant une proposition de recharge combinant plusieurs propositions de recharge

2. Procédé de gestion selon la revendication 1 **caractérisé en ce que** la demande (DEM) de recharge comprend une information de quantité de charge électrique à transférer durant la recharge, dite quantité de charge demandée, et **caractérisé en ce que**, lorsque les propositions de recharge par les terminaux clients (TC1, TC2, TC3) comprennent des quantités de charge proposées inférieures à la quantité de charge demandée, la réponse (REP) inclut une proposition de recharge combinant plusieurs propositions de recharge assurant la recharge demandée

3. Procédé de gestion selon l'une des revendications 1 ou 2 **caractérisé en ce que** la demande (DEM) de recharge comprend une information de localisation et **en ce que** l'étape de recherche (REC) se fonde sur cette information

4. Procédé de gestion selon l'une des revendications 1 à 3 **caractérisé en ce que** l'étape de recherche (REC) comprend une transmission par l'entité de gestion (EG) à des terminaux clients (TC1, TC2, TC3) de la demande (DEM) de recharge reçue

5. Procédé de gestion selon l'une des revendications 1 à 4 **caractérisé en ce qu'**il comprend de surcroît une réception par l'entité de gestion (EG) d'une information (INF) représentative d'un choix par le terminal client demandeur (TC) parmi les propositions de recharge transmises par l'entité de gestion (EG)

6. Procédé de gestion selon l'une des revendications 1 à 5 **caractérisé en ce qu'**une proposition de recharge comprend une ou plusieurs données choisies parmi :
a. les coordonnées d'un lieu où effectuer la recharge ;
b. un créneau temporel durant lequel effectuer la recharge ;
c. une quantité de charge électrique à transférer durant la recharge ;
d. une donnée représentative d'une contrepartie pour effectuer la recharge

7. Procédé d'obtention d'une recharge d'une batterie d'un véhicule électrique réalisé par un terminal client (TC) associé audit véhicule électrique, dit terminal client demandeur, le terminal client demandeur (TC) étant apte à communiquer via un réseau de communication (NET), **caractérisé en ce qu'**il comprend une transmission par le terminal client demandeur (TC), via le réseau de communication (NET), vers une entité de gestion (EG), d'une demande (DEM) de recharge d'une batterie dudit véhicule électrique suivie par la réception par le terminal client demandeur (TC) d'une réponse (REP) incluant une liste de terminaux clients aptes à répondre à la demande (DEM) de recharge par des propositions de recharge, ladite réponse (REP) comprenant une proposition de recharge combinant plusieurs propositions de recharge

8. Procédé d'obtention selon la revendication 7 **caractérisé en ce qu'**il comprend de surcroît l'émission par le terminal client demandeur (TC) vers l'entité de gestion (EG) d'une information (INF) représentative d'un choix de terminal client dans la liste incluse dans la réponse (REP) reçue

9. Procédé d'obtention selon l'une des revendications 7 ou 8 **caractérisé en ce que** la liste de terminaux clients aptes à répondre à la demande (DEM) incluse dans la réponse (REP) comprend des informations de contact des terminaux clients aptes à répondre et **caractérisé en ce que** le procédé comprend de surcroît l'émission d'un message par le terminal client demandeur (TC) vers un des terminaux clients aptes à répondre en utilisant les informations de contact de ce terminal client

10. Procédé d'obtention selon l'une des revendications 7 à 9 **caractérisé en ce que** la demande (DEM) de recharge est transmise par le terminal client demandeur (TC) après un calcul prenant en compte au moins un paramètre choisi dans la liste suivante :
a. la localisation du véhicule électrique auquel le terminal client demandeur (TC) est associé ;
b. la direction et la vitesse de déplacement dudit véhicule électrique ;
c. la charge courante de la batterie ;
d. la consommation du véhicule électrique ;
e. la présence de points de recharge de batteries à proximité de la localisation du véhicule électrique auquel le terminal client demandeur (TC) est associé dans la direction de son déplacement

11. Entité de gestion (EG) dotée de moyens de communication la rendant apte à communiquer via un réseau de communication (NET), comprenant un module (101) de réception de demandes (DEM) de recharges de batteries de la part de terminaux clients (TC), un module de recherche (102) de terminaux clients (TC1, TC2, TC3) aptes à répondre à une demande (DEM) de recharge reçue par des propositions de recharge et un module de réponse (103) apte à émettre une réponse (REP) incluant une liste de terminaux clients aptes à répondre à une demande (DEM), ladite réponse comprenant une proposition de recharge combinant plusieurs propositions de recharge, l'entité de gestion (EG) étant apte à réaliser un procédé de gestion selon la revendication 1

12. Terminal client (TC) doté de moyens de communication le rendant apte à communiquer via un réseau de communication (NET), comprenant un module (201) de transmission d'une demande (DEM) de recharge de batterie auprès d'une entité de gestion (EG) et un module (202) de réception de réponse (REP) incluant une liste de terminaux clients aptes à répondre à la demande (DEM) de recharge par des propositions de recharge, ladite réponse (REP) comprenant une proposition de recharge combinant plusieurs propositions de recharge, le terminal client (TC) étant apte à réaliser un procédé d'obtention selon la revendication 7

13. Véhicule automobile électrique comprenant un terminal client (TC) selon la revendication 12

14. Terminal mobile selon la revendication 12

15. Programme d'ordinateur apte à être mis en oeuvre par une entité de gestion (EG), le programme comprenant des instructions de code qui, lorsqu'il est exécuté par un processeur, réalise les étapes du procédé de gestion défini dans la revendication 1

16. Programme d'ordinateur apte à être mis en oeuvre par un terminal client (TC), le programme comprenant des instructions de code qui, lorsqu'il est exécuté par un processeur, réalise les étapes du procédé d'obtention défini dans la revendication 7
